# DEMANDE DE BREVET EUROPEEN

(11) **EP 2 180 458 A1**
(43) Date de publication de la demande: **28.04.2010**
(21) Numéro de dépôt: 08018759.4
(22) Date de dépôt: 27.10.2008
(51) Int. Cl.: G09B 21/00, G09B 21/02

(54) **Dispositif pour écrire en relief**

(71) Demandeur: Betton, René, 61100 Flers (FR)
(72) Inventeur: Betton, René, 61100 Flers (FR)

(57) **Abrégé**

L'invention concerne un dispositif permettant d'écrire en relief par effacement de bossages pour faire apparaître ceux nécessaires à la réalisation de codes ou graphismes.

Il est constitué d'un support (1) avec des bossages (2) maintenus au-dessus d'évidements (5) par une jonction (4) et une membrane (3).

L'écrasement de bossages provoque le déchirement de la membrane située sur le pourtour de ceux-ci et leur abaissement dans les évidements, ces bossages étant toujours reliés au support par la jonction et utilisés en fonction des besoins à l'obtention de reliefs.

Le dispositif selon l'invention est particulièrement destiné à l'écriture en braille.

## Description

La présente invention concerne un dispositif pour écrire en relief des lettres, des chiffres ou des signes notamment suivant le code braille pour aveugles ou malvoyants et pour réaliser des graphismes.

L'obtention de reliefs, picots ou bossages se fait traditionnellement par la pose ou le dépassement de petites pointes ou picots sur des supports avec des éléments mobiles nécessitant l'utilisation de nombreuses pièces pour réaliser l'opération avec parfois un assemblage long à effectuer.

Le dispositif selon l'invention permet de remédier à ces inconvénients. Il comporte en effet un support muni de bossages maintenus sur leur pourtour par une membrane et une jonction avec dessous des évidements. Une pression exercée dans la zone au-dessus d' évidements provoque le déchirement de la membrane entre le support et les bossages concernés dont on souhaite la disparition, par exemple pour faire apparaître un code ou former un graphisme. Cette pression entraine l'abaissement de ces bossages, leur pénétration dans les évidements correspondants ainsi que la disparition de leur relief tout en restant retenus au support par la jonction qui les relie.

Les bossages introduits dans les évidements sont immobilisés en contact avec la paroi de ces évidements, avec éventuellement une retenue le long de la paroi dé ceux-ci, leur retour à une position en relief s'effectue par une pression sous le support à l'intérieur des évidements, ce qui peut être utile pour corriger une erreur ou réaffecter le support à un marquage différent.

Une faible paroi de la membrane peut se située éloignée des bossages et permettre un déchirement progressif vers ces bossages disposant d'une meilleure résistance à des pressions non voulues, leur sommet étant plus exposé à des contacts intempestifs.

Selon un mode particulier de réalisation, les reliefs sont surélevés à leur fabrication et reliés au support par leur jonction dans une zone inférieure, la trajectoire des reliefs pour obtenir les points, partant d'une position haute, éloignant ceux-ci en se rapprochant du même niveau que la fixation au support, et ainsi ils se positionnent décalés en appui sur le support, pour leur utilisation.

En référence aux dessins le dispositif comporte un support (1) avec en relief sur le dessus des bossages (2) maintenus au-dessus d'évidements (5) par une jonction (4) flexible et une membrane (3) permettant après déchirement de cette membrane le déplacement du point.

Le support peut être muni sur ses côtés d'épaulements pour un maintien ou une immobilisation suivant le sens dont on le pose dans l'ouverture d'une feuille ou d'une plaque.

Le dispositif peut être réalisé moulé en matière caoutchoutée.

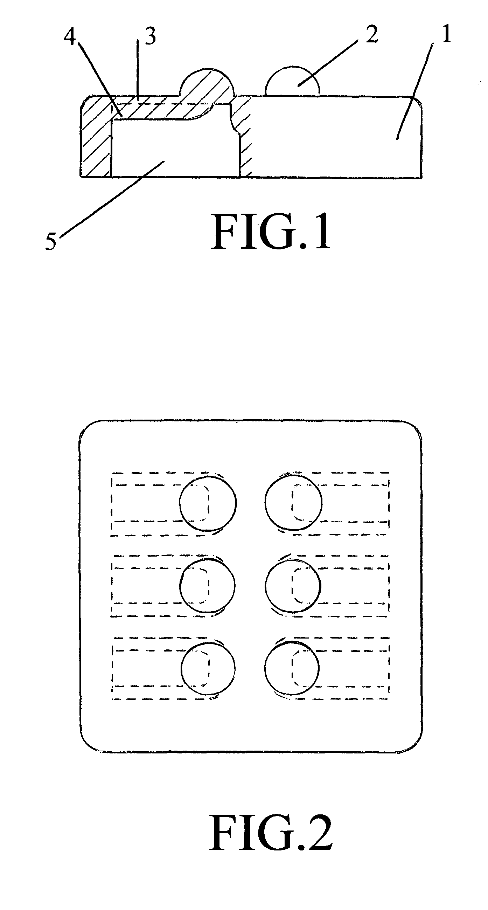

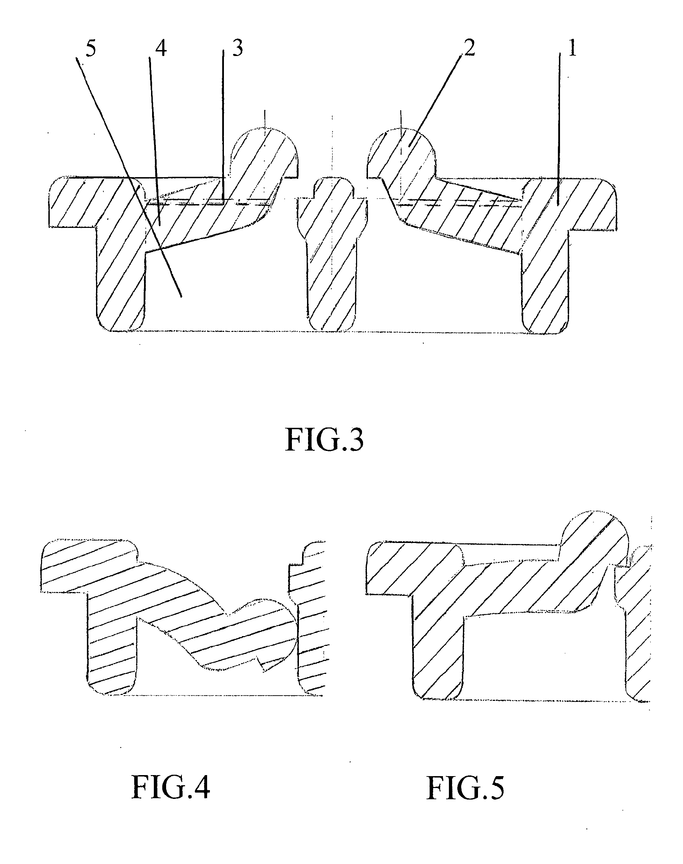

## Revendications

1. Dispositif pour écrire en relief **caractérisé en ce qu'**il comporte un support ( 1 ) muni de bossages ( 2 ) maintenus sur leur pourtour par une membrane ( 3 ) et une jonction ( 4 ) avec dessous des évidements ( 5 ). Une pression exercée dans la zone au-dessus d'évidements provoque le déchirement de la membrane entre le support et les bossages concernés, l'abaissement de ces bossages, leur pénétration dans les évidements correspondants ainsi que la disparition de leur relief.

2. Dispositif selon là revendication 1 **caractérisé en ce que** les bossages (2) introduits dans les évidements (5) sont immobilisés en contact avec la paroi de ces évidements, leur retour à une position en relief s'effectue par une pression sous le support à l'intérieur des évidements.

3. Dispositif selon la revendication 1 **caractérisé en ce qu'**une faible paroi de la membrane (3) se situe éloignée du bossage (2) et permet un déchirement progressif vers celui-ci.

4. Dispositif selon la revendication 1 **caractérisé en ce que** les reliefs surélevés à leur fabrication et reliés au support par leur jonction dans une zone inférieure se positionnent décalés en appui sur le support pour leur utilisation.

5. Dispositif selon la revendication 1 ou la revendication 2
**caractérisé en ce que** le support (1) est muni sur ses côtés d'épaulements pour un maintient ou une immobilisation suivant le sens dont on le pose dans l'ouverture d'une feuille ou d'une plaque.
